# EUROPEAN PATENT SPECIFICATION

(11) **EP 3 155 282 B1**
(45) Date of publication and mention of the grant of the patent: **07.11.2018**
(21) Application number: 13821531.4
(22) Date of filing: 17.12.2013
(51) Int. Cl.: F16D 63/00

(54) **TRANSMISSION GEAR ENGAGEMENT SYSTEM**
SCHALTGANGEINLEGESYSTEM
SYSTÈME D'ENGRÈNEMENT D'ENGRENAGES DE TRANSMISSION

(43) Date of publication of application: 19.04.2017
(73) Proprietor: Przemyslowy Instytut Automatyki i Pomiarow PIAP, 02-486 Warszawa (PL)
(72) Inventor: ZBOINSKI, Mariusz, 00-086 Warszawa (PL); CZUPRYNIAK, Rafal, 05-870 Blonie (PL)
(74) Representative: Adamczyk, Piotr
(86) International application number: PCT/PL2013/000166
(87) International publication number: WO 2015/093993

(56) References cited:
- DE-A1- 3 037 191
- DE-A1-102007 035 790
- US-A- 3 400 797
- US-A- 4 291 586

## Description

The invention relates to a gear engagement system in a transmission, especially a planetary gear, that allows for applying the solution in various fields of technology, in particular in robotics or remotely controlled models.

The gear engagement system in a transmission is applied in controlling systems using a device consisting of a variable ratio transmission.

Such a gear engagement system is known e.g. from US4291586A1.

Devices where the system is driven by gear-motor consisting of an electric motor and a single- or multiple-stage transmission of fixed ratio are known in the art. Many devices require control using a device consisting of a variable ratio transmission. However, the applied mechanism of a single- or multiple-stage fixed ratio transmission in the situation when a device must move at high speed and at the same time operate under significant load imposed on the traction system causes that the gear is selected optimally for single or both of these requirements, which leads to overloading the driving mechanism. The following is the example of these extreme and contradictory requirements of mobile robots:
1) towing a vehicle along a slight slope or driving with a heavy loaded mobile robot up a hill of significant inclination;
2) approach to the location of a task at significant speed.

Moreover, Polish patent application P.385935A1 discloses a centre tooth with a convex rotary profile, representing toothing, especially of the external teeth of a toothed wheel; it has a creating geometry of plain and symmetrical solid of revolution and circular root surface, and the tooth profile corresponds to involute, cycloidal, circularly and arched or other profile. The subject of the invention is also a centre tooth with a bilaterally concave profile, representing toothing, especially the internal or external teeth of a toothed wheel of cuboid geometry or truncated wedge with notches geometry, resulting from the character of meshing with convex centre teeth and a strand ring toothed wheel of internal teeth resulting from standardised geometry and the dimension of the strand cooperating with it. The method of centre tooth implementation in the toothed wheel rim consists in that the centre tooth has the mounting part, and the two parts of the rim, forming a toothed wheel, connected with each other, fixedly bind the tooth.

Another Polish patent application, P.304280A1, discloses a clutch disk construction with a fixed torque value of clutch disengagement. A row of centres is made on the surface of the operating disk. The centres are arranged along the external diameter of the disk so that the width of subsequent centres increases towards a clockwise direction, and the centres from the second group are arranged along the internal diameter of the disk, and their width increases towards a counter clockwise direction.

Polish patent application PL139840 discloses a jaw clutch applied in motorcycle gearboxes, consisting of a shaft with an active toothed wheel seated on it, equipped with centres and a passive toothed wheel with seats for the centres. The clutch can be characterised by an active toothed wheel that has at least two centres in the shape of a ring with a side surface in the shape of truncated cone, limited with two pairs of parallel planes inclined towards the wheel symmetry axis at an angle resulting from the size of backlash necessary to engage the clutch; however, the passive toothed wheel has seats with a rectangular front cross-section and a circular axial cross-section.

Another Polish patent application, PL138760, discloses an electromagnetic centre or toothed clutch, automatically and synchronously engaged without a slip, having two rings of paramagnetic material fixed to both moving parts of the clutch; however, a few permanent magnets are installed in one of the rings, and the other is equipped with inserts of soft steel in an amount being the multiplicity of the magnets, and the fixed part of the clutch is equipped with a coil. The clutch can be characterized by a cylindrical sleeve that is fixedly installed on the shaft and rotates together with the shaft, and the cylindrical clutching part is installed around it using splines, moving axially in the keys with rims of different diameters of teeth and wedges made on the front surface. The front surface of the wedges, located on one rotating part, is protruding beyond the front surface of the teeth, and the fixed cylindrical ring of paramagnetic material is fixed on splines around the clutching part and is installed with a screw to a sleeve with permanent magnets fixed circumferentially and in parallel to the shaft at the division plane, and the other shaft is equipped with the fixed active cylindrical part of the clutch that rotates together with it, which has an annular chamber, in which an electromagnetic coil is fixedly located and installed on a ring supported by rolling bearings on the cylindrical part, around which and around the coil, there is a paramagnetic ring rotating with it with soft steel inserts mounted circumferentially and in parallel to the shaft, in an amount which is the total multiplicity of the permanent magnets, and from the division plane, on the cylindrical active part, there are teeth and wedges rims cooperating with teeth and wedges of the shifting clutching part. On the opposite side, in the division plane and from the shaft side in the shifting clutching part, there is an annular chamber in which the locking ring of the hydraulic pressure head is installed on two ball thrust bearings.

Gearboxes, according to the art, with planetary gears can be characterised by the fact that one of the gearbox inputs stops at one stage and is released at the other. In most solutions, this is accomplished using friction brakes. As a rule, increasing the friction on friction elements is performed mostly by means of pressure using hydraulic systems. Such systems can be miniaturised only to a certain extent. Moreover, friction systems can be characterised by relatively high pressure forces, which in the mentioned applications can pose a significant implementation problem (high relative power, dimensions, pressure system weight).

The purpose of the invention is the reduction of pressure forces and reduction of the system size in order for it to be implemented in small constructions, such as mobile robots or remotely controlled models.

The transmission gear engagement system has a toothed wheel with internal and/or external teeth installed in the housing on bearings. The toothed wheel has notched claws on the front surface and is stopped using a coaxial, opposite ring with claws matched to the claws of the toothed wheel.

The ring is connected on both sides with two symmetrical cams, and the cams are connected with a driving member (driving claw). The ring is connected to each cam using a connector. The connector is fixedly installed in the ring or represents an element of the ring. The ring, together with the toothed wheel, is located inside the housing, and the cams, drive/driving claw, springs and actuator are located outside the housing. The connector and the fixing elements pass through the housing wall.

The drive/driving claw, is connected with the actuator. The cams are pulled by the drive/driving claw, which in turn is pulled by the actuator. An electromagnet or motor or linear cylinder is the actuator.

To ensure uniform pressure of the ring on the toothed wheel, which is necessary for correct operation of the clutch/brake as regards strength and operational reasons, at least three, preferably four, spring mounting elements are radially located on the ring; however, the other ends of the springs are fixed to the housing.

The ring moves axially in the housing by means of the connectors' movement, which are shifted by the cams installed on the bearings in the housing.

The cam system, due to its construction, ensures reduction of forces together with the change of shift of the drive/driving claw.

Meshing of the toothed wheels with the (pressure) plates should not take place during driving, unless there is another additional clutch, like in a vehicle, and in such a case, there are no contraindications.

As a result of applying a transmission gear engagement system according to the invention, there is a reduction of pressure forces and a reduction of the system size in order to implement it in small constructions, such as mobile robots or remotely controlled models. The device benefits from the fact that it increases the mobility, in particular of a mobile robot, providing the option to change the gears depending on the required mode of operation (under severe condition, weight 80 kg, maximum speed 8 km/h, estimated time of operation 10 years, 8 h a day at variable revolutions).

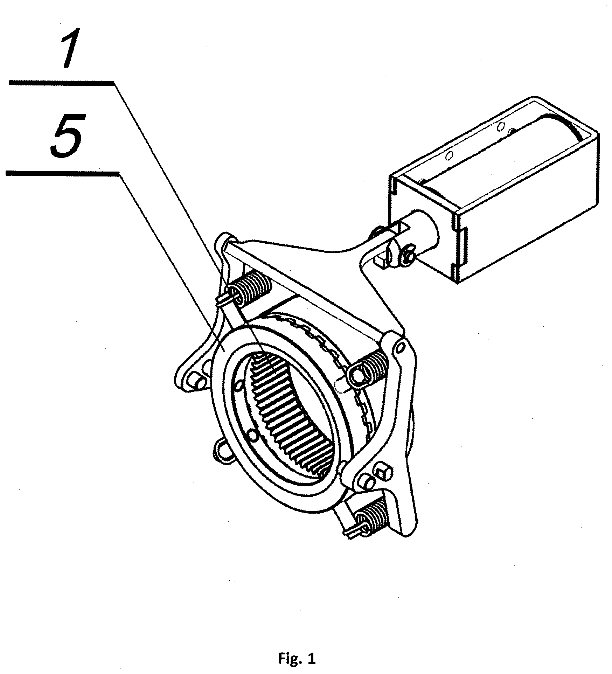

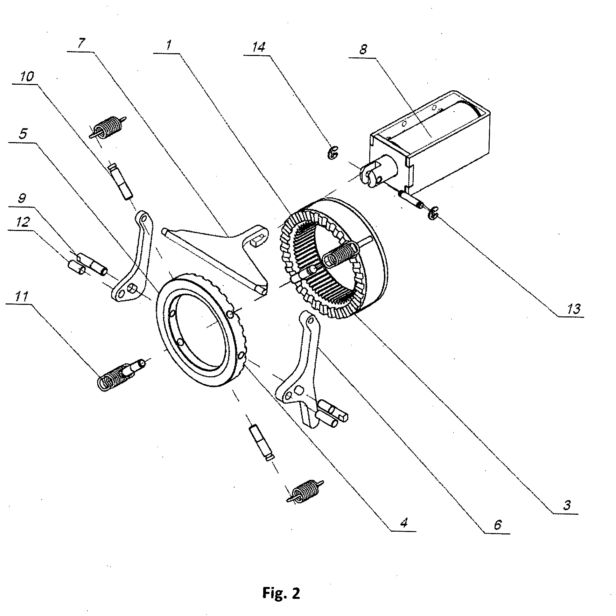

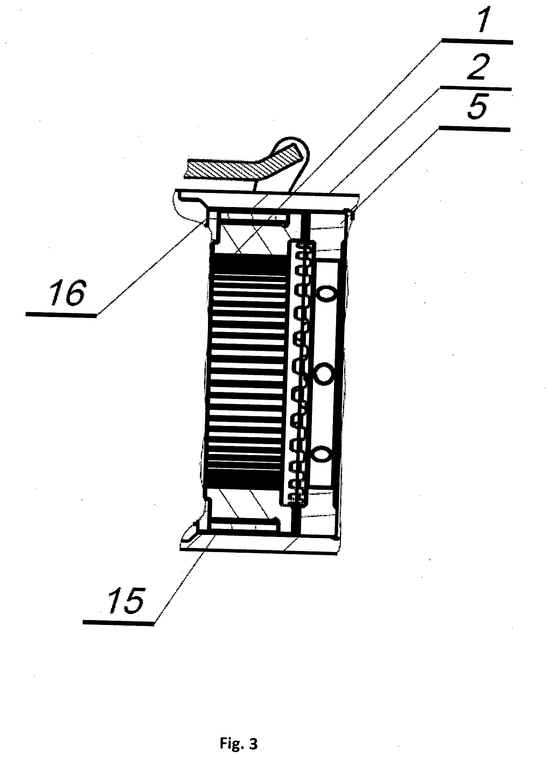

The system, according to the invention, is presented in the drawing, where Fig. 1 presents an axonometric view of the system (without housing); Fig. 2 presents an exploded axonometric view of the system and Fig. 3 an axial cross-section view.

The device can be installed and used in particular in robots controlled using a differential method (difference of slip between left and right caterpillar) and in the Ackerman's system.

The system, according to the embodiment, is applied in two motor-gears consisting of a transmission gear engagement system of variable ratio driven by an actuator. The actuators are located in parallel and opposite to each other.

The system of transmission gear engagement presented in the embodiment comprises a toothed wheel (1) with internal teeth, installed on bearing. The toothed wheel (1) with radially notched claws(3) on the front surface is stopped/maintained using a coaxial, opposite ring (5) with claws(4) matched to the claws(3) of the toothed wheel (1). Two clutches/centre brakes released manually from the outside or automatically are used to stop the toothed wheels (1). Two gears with stopped and released rings with internal teeth are the essence of operation of the transmission gear engagement system. The toothed wheel (1) is supported on bearings in the housing (2), which when released, can freely rotate. The ring (5) is connected on both sides with two symmetrical cams (6), and the cams (6) are connected with a driving member or claw (7). The ring is connected with each cam using a connector fixedly installed in the ring. The ring, together with the toothed wheel, is located inside the housing (shown in drawing No 3), and the cams (6), driving claw (7), springs (11) and actuator (8) are located outside the housing (2). The connector (9) and the fixing elements pass through the housing (2) wall.

The driving centre is connected to the actuator using a connector in the form of a shaft (13) and spring washers(14). The cams (6) are pulled by the driving claw (7), which in turn is pulled by the actuator (8). In this case, an electromagnet is the actuator.

To ensure uniform pressure of the ring on the toothed wheel, which is necessary for correct operation of the brake as regards strength and operational reasons, four spring mounts (10) are radially located on the ring; however, the other ends of the springs are fixed to the housing (2).

The ring (5) moves axially in the housing by means of the connectors' (9) movement, which are shifted by the cams (6) installed on a bearing in the housing (2). A bearing element in the form of a shaft (12) is used.

Meshing of the toothed wheels (1) with the (pressure) plates (16) should not take place during driving, unless there is another additional clutch, like in a vehicle, and in such a case, there are no contraindications.

In other words, in the embodiments, it is possible to execute the system, where the ring (5) will not return, despite operation of the springs (11).

Simultaneous snapping of the claws (3, 4) locks the transmission. This feature can be used as a safety brake when the motor is overheated and there is a need for its disengagement during operation by the safety system.

As a result of applying the transmission gear engagement system, according to the invention, there is reduction in the size of the system in order to implement it in small constructions, such as mobile robots. The device, according to the invention, benefits from the fact that the system increases the mobility, in particular of a mobile robot, by means of the option to change gears depending on the required mode of operation. The robot, with the first gear engaged, overcame terrain obstacles on an inclination of 35 degrees with an additional load (over standard) of 50 kg, and in second gear, it reached a speed of 7 km/h (extreme cases - contradictory). The tests were performed for 6 h a day for 2 working weeks with variable loads and under different weather conditions. The tests did not show any defects nor symptoms or wear beyond the what was expected; when merging this information with the verified process of calculations and design, one may find that motor-gears, especially gear shifting systems, will be able to operate for the assumed 10-year period.

## Claims

1. A gear engagement system with clutching elements equipped with claws, which comprises a housing (2) with a housing wall, a toothed wheel (1) having first claws (3), a ring (5) having second claws (4), bearings for the toothed wheel (1), at least one lever connected with the ring (5) by means of connector, wherein the the toothed wheel (1), the ring (5) and the bearings are located in the housing (2), the toothed wheel (1) has internal and/or external teeth, the first claws (3) are notched on the front surface of the toothed wheel (1), the ring (5) is coaxial with the toothed wheel (1) and located opposite to the toothed wheel (1), the second claws (4) matches to the first claws (3), **characterised in that** it comprises an actuator (8) and two levers in the form of symmetrical cams (6), first ends of the cams (6) are mounted to the housing (2) by means of two bearing elements in form of a shaft (12), the ring (5), on its both sides, is connected with the cams (6) by means of two connectors (9) located in the middle part of each cam (6), second ends of the cams (6) are connected with a first end of a driving member (7); the ring (5) has at least three spring mounting elements (10) installed radially on the ring (5) and at least three springs (11) connect the mounting elements (10) with the housing (2), the cams (6), the driving member (7), the springs (11) and the actuator (8) are located outside the housing (2), the connectors (9) and the spring mounting elements (10) pass through the housing (2) wall while second end of the driving member (7) is connected with the actuator (8).

2. The system, according to claim 1, **characterised in that** an electromagnet or motor or linear cylinder is the actuator (8).

3. The system, according to claim 1, **characterised in that** four spring mounting elements (10) are installed on the ring (5).

4. The system, according to claim 1, **characterised in that** the connector (9) are fixedly installed in the ring (5) or represents an element of the ring (5).

## Patentansprüche

1. Ein Gangschaltungssystem mit Einkuppelelementen, ausgestattet mit Klauen, bestehend aus einem Gehäuse (2) mit Gehäusewand, einem Zahnrad (1) mit den ersten Klauen (3), einem Ring (5) mit den zweiten Klauen (4), den Lagern des Zahnrades (1), mindestens einem mit dem Ring (5) mittels eines Bindegliedes verbundenen Hebel, wo das Zahnrad (1), der Ring (5) und die Lager im Gehäuse (2) untergebracht sind, der Zahnrad (1) einen internen und/oder externen Zahn hat, die ersten Klauen (3) an der Frontfläche des Zahnrades (1) in Kerben befestigt sind, der Ring (5) koaxial mit dem Zahnrad (1) und gegenüber dem Zahnrad (1) angeordnet ist und die zweiten Klauen (4) die ersten Klauen (3) treffen, **dadurch gekennzeichnet, dass** es einen Betätiger (8) und zwei Hebel in Form symmetrischer Nocken (6) enthält, die ersten Enden der Nocken (6) am Gehäuse (2) mittels zwei Lagerelemente in Form eines Schafts (12) montiert sind, der Ring (5) an beiden Seiten mit den Nocken (6) mittels zwei Bindeglieder (9) verbunden ist, die in der Mitte einer jeden Nocke (6) platziert sind, die zweiten Enden der Nocken (6) mit dem ersten Ende des antreibenden Gliedes [driving member] (7) verbunden sind; der Ring (5) weist mindestens drei Feder-Befestigungselemente (10) auf, die am Ring (5) radial montiert sind, und mindestens drei Federn (11) verbinden die Befestigungselemente (10) mit dem Gehäuse (2), die Nocken (6), das antreibende Glied (7), die Feder (11) und der Betätiger (8) außerhalb des Gehäuses (2) angebracht sind, die Bindeglieder (9) und die Feder-Befestigungselemente (10) durch die Wand des Gehäuses (2) durchgehen, während das zweite Ende des antreibenden Gliedes (7) mit dem Betätiger (8) verbunden ist.

2. Das System nach Patentanspruch 1 **dadurch gekennzeichnet, dass** ein Elektromagnet oder ein Motor oder ein Linearzylinder als der Betätiger (8) dient.

3. Das System nach Patentanspruch 1 **dadurch gekennzeichnet, dass** vier Feder-Befestigungselemente (10) am Ring (5) installiert sind.

4. Das System nach Patentanspruch 1 **dadurch gekennzeichnet, dass** die Bindeglieder (9) im Ring (5) fest installiert sind oder ein Element des Rings (5) darstellen.

## Revendications

1. Système d'engrenage qui se compose d'éléments d'embrayage équipés de griffes, qui comprend un carter (2) avec une paroi de carter, une roue dentée (1) ayant des premières griffes (3), un anneau (5) ayant des secondes griffes (4), des paliers des roues dentées (1), au moins un levier relié à l'anneau (5) au moyen d'un connecteur, dans lequel la roue dentée (1), l'anneau (5) et les paliers sont situés dans le carter (2), la roue dentée (1) a des dents internes et/ou externes, les premières griffes (3) sont entaillées sur la surface avant de la roue dentée (1), l'anneau (5) est coaxial à la roue dentée (1) et situé en face de la roue dentée (1), les secondes griffes (4) correspondent aux premières griffes (3), **caractérisé en ce qu'il** comprend un servomoteur (8) et deux leviers en forme des cames symétriques (6), les premières extrémités des cames (6) étant montées sur le carter (2) au moyen de deux éléments paliers en forme d'arbre (12), l'anneau (2) est relié sur les deux côtés aux paliers (6) au moyen de deux connecteurs (9) situés dans la partie centrale de chaque palier (6), et les secondes extrémités des paliers (6) sont reliées à une première extrémité d'un organe d'entraînement (7) ; l'anneau (5) comporte au moins trois éléments de montage à ressort (10) installés radialement sur l'anneau (5), et au moins trois ressorts (11) relient les éléments de montage (10) dans le carter (2), les paliers (6), l'élément d'entraînement (7), les ressorts (11) et le servomoteur (8) sont situés à l'extérieur du carter (2), les connecteurs (9) et les éléments de montage à ressort (10) passent à travers de la paroi du carter (2), tandis que la deuxième extrémité de l'élément d'entraînement (7) est reliée au servomoteur (8).

2. Le système, selon la revendication 1, **caractérisé en ce qu'un** électroaimant ou un moteur ou un cylindre linéaire est le servomoteur (8).

3. Le système, selon la revendication 1, **caractérisé en ce que** quatre éléments de montage à ressort (10) sont installés sur l'anneau (5).

4. Le système, selon la revendication 1, **caractérisé en ce que** les connecteurs (9) sont montés de manière fixe sur l'anneau (5) ou représentent un élément de l'anneau (5).
